# EUROPEAN PATENT APPLICATION

(11) **EP 2 876 028 A1**
(43) Date of publication of application: **27.05.2015**
(21) Application number: 13193733.6
(22) Date of filing: 20.11.2013
(51) Int. Cl.: B62M 1/12, B62M 1/16

(54) **Amusement vehicle with rowing-type auxiliary device**

(71) Applicant: HuiZhou HuaEr WanTong Industry Co., Ltd., Huizhou City Guangdong (CN)
(72) Inventor: Li, Ji, Lixian Hunan (CN); Tsay, Shern-Ji, 807 Kaohsiung city (TW)
(74) Representative: Chaillot, Geneviève

(57) **Abstract**

An amusement vehicle with rowing-type auxiliary device (2) mainly comprises a rotating apparatus (22) pivotally disposed on the chassis (21) and a controlling apparatus (24) disposed on both sides of a seat (23) of the chassis (21). The controlling apparatus (24) comprises two controlling wheels (241) pivoted on the chassis (21), a pair of transmission assemblages (242) disposed on the chassis (21) to drive the controlling wheel (241), and two controlling bars (243) disposed to drive the transmission assemblages (242)respectively. Each transmission assemblage (242) includes a unidirectional device (2424) disposed on a driving gear (2423) which is connected to the controlling wheel (241). By using hands to cause a reciprocating movement of the controlling bars (243), the transmission assemblage (242) drives the controlling wheels (241) to rotate in one direction and move forwards. The rotating apparatus (22) is controlled by stepping feet on to decide the moving direction. Therefore, users use hands and feet to obtain a self-propelling sliding motion, thereby increasing the exercise and amusement of the use.

## Description

### BACKGROUND OF THE INVENTION

### 1. Field of the Invention

The present invention relates to an amusement vehicle, particularly to an amusement vehicle with rowing-type auxiliary device which obtains the exercise of hands and feet in use.

### 2. Description of the Related Art

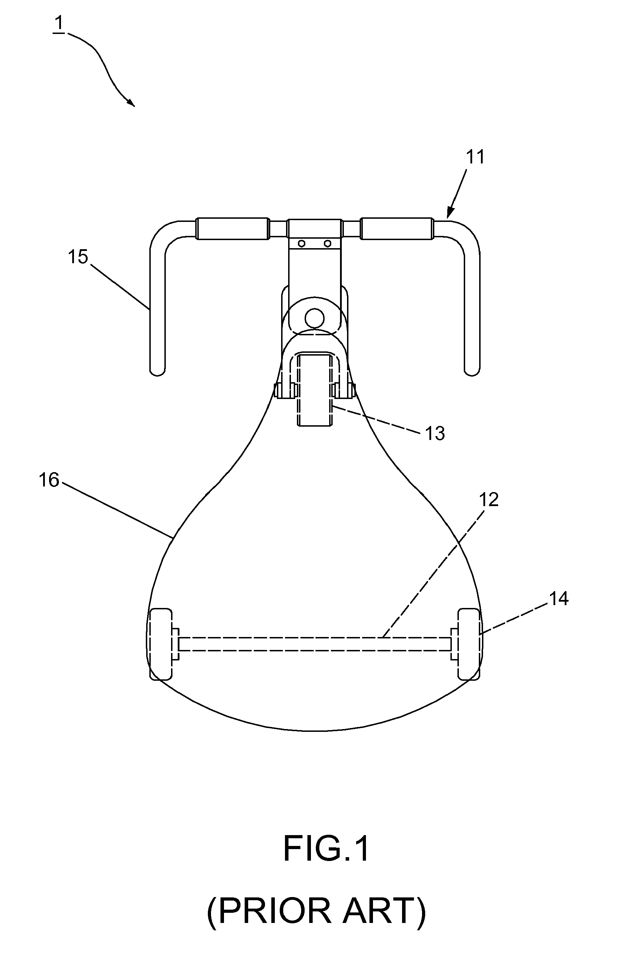

Referring to Fig.**1**, a conventional amusement vehicle **1** comprises a steering bar **11,** a supporting stem **12** opposite to the steering bar **11,** a front wheel **13** pivoted on the steering bar **11,** and two rear wheels **14** disposed at two sides of the supporting stem **12;** wherein a handle **15** gripped by hands is disposed on the steering bar **11,** and a seat **16** for sitting is disposed on the supporting stem **12** and connected to the steering bar **11.** While using, a user sits on the seat **16,** bends his knees for placing his feet on the steering bar **11,** and then puts his hands on the handle **15.** Then, the repeated wriggles of buttocks and the left-right reciprocating swings of hands drive the front wheel **13** and the rear wheels **14** to move forwards. However, the vehicle **1** is inconvenient in use because the user can only experience a partial exercise and need to operate in a bended gesture, which causes the user to be apt to feel monotonous and bored and causes the user unable to enjoy a fun of amusement and exercise.

### SUMMARY OF THE INVENTION

Accordingly, the purpose of the present invention is to provide an amusement vehicle with rowing-type auxiliary device operated by hands and feet at the time of using, thereby increasing the exercise and amusement of the use.

The amusement vehicle with rowing-type auxiliary device comprises a chassis, a rotating apparatus pivoted on the chassis, a seat disposed on the chassis, and a controlling apparatus disposed at two sides of the seat; wherein the rotating apparatus provides a rotor pivotally disposed on the chassis, a rotating wheel pivoted on the rotor, and a pedal disposed on the rotor. The controlling apparatus comprises a controlling wheel pivoted on the chassis, a pair of transmission assemblages separately disposed on the chassis for driving a rotation of the controlling wheel, and two controlling bars disposed to drive the transmission assemblage to operate respectively. Each of the transmission assemblage provides a controlling gear disposed on the controlling bar, a linking unit driven by the controlling gear, a driving gear driven by the linking unit and connected to the controlling wheel, and a unidirectional device disposed on the driving gear. Therefore, the user merely moves two controlling bars by hands from side to side to drive the transmission assemblage and create a dynamic force for activating the rotation of two controlling wheels. With the unidirectional device, the normal rotation of the driving gear of the transmission assemblage is not offset by a reverse force generated from the specific driving of the controlling gear, which allows the controlling wheels to rotate in one direction and increases the moving stability of the amusement vehicle. At the same time, stepping on the rotating apparatus by feet can control the rotating angle and move the vehicle forwards for generating a self-propelling sliding motion. Therefore, the fun of exercise and amusement in use is increased by using the motion of hands to control the speed of acceleration and using the stepping of feet to control the rotating angle of moving.

### BRIEF DESCRIPTION OF THE DRAWINGS

Fig.1 is a schematic view showing a conventional torsion car 1;
Fig.2 is a perspective view showing a first preferred embodiment of the present invention;
Fig.3 is an exploded view showing partial components of the first embodiment of the present invention;
Fig.4 is an enlarged cross-sectional view showing partial components of the first embodiment of the present invention; and
Fig.5 is an end view showing a second preferred embodiment of the present invention.

### DETAILED DESCRIPTION OF THE PREFERRED EMBODIMENTS

Before the present invention is described in greater detail, it should be noted that the like elements are denoted by the same reference numerals throughout the disclosure.

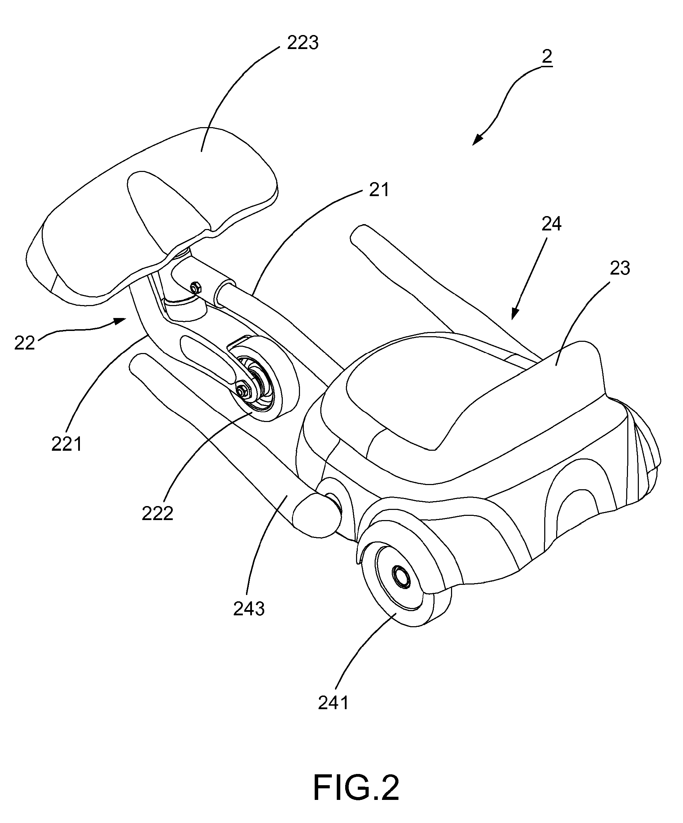

Referring to Fig. **2****,** a first preferred embodiment of the amusement vehicle with rowing-type auxiliary device **2** comprises a chassis **21,** a rotating apparatus **22** pivoted on the chassis **21,** a seat **23** disposed on the chassis **21,** and a controlling apparatus **24** disposed on two sides of the seat **23;** wherein the rotating apparatus **22** provides a rotor **221** pivotally disposed on the chassis **21,** a rotating wheel **222** pivoted on the rotor **221,** and a pedal **223** disposed on the rotor **221.** In this embodiment, the rotor **221** is extended to be disposed in the back of the pedal **223,** whereby the rotating wheel **222** and the controlling wheel **241** of the controlling apparatus **24** are constructed as a stable configuration to stably support the chassis **21** and the seat **23.** The pedal **223** is connected to the rotor **221,** and feet are put on the pedal **223.** Consequently, the user can use the pedal **223** to control the rotating angle of the rotor **221** and further control the moving direction of the amusement vehicle with rowing-type auxiliary device **2.**

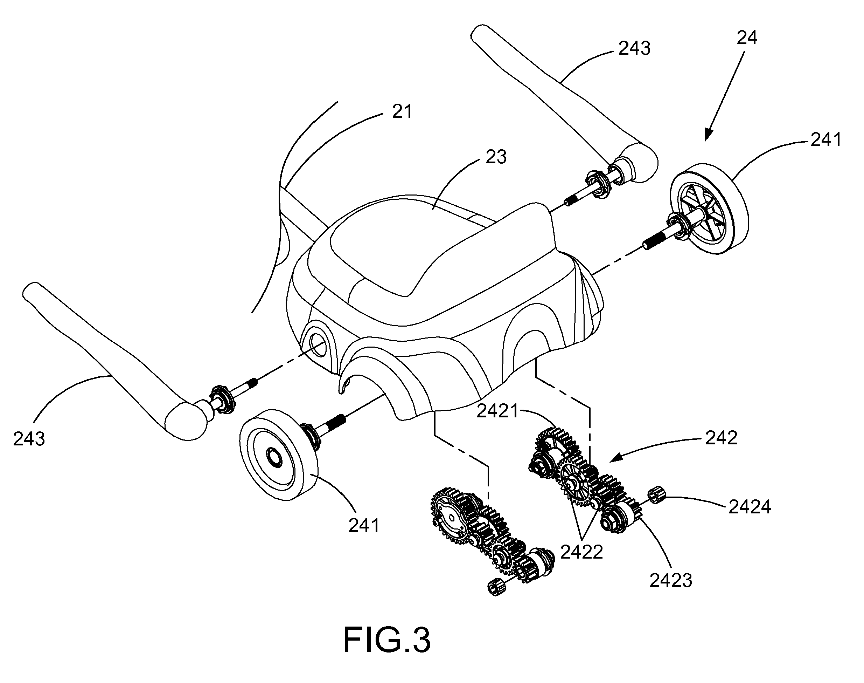

Referring to Fig. **3****,** the controlling apparatus **24** comprises a controlling wheel **241** pivoted on the chassis **21,** a transmission assemblage **242** separately disposed on the chassis **21** for driving a rotation of the controlling wheels **241,** and two controlling bars **243** disposed to drive the transmission assemblage **242** to operate respectively; wherein the transmission assemblage **242** provides a controlling gear **2421** disposed on the controlling bar **243,** a linking unit **2422** driven by the controlling gear **2421,** a driving gear **2423** driven by the linking unit **2422** and connected to the controlling wheel **241,** and a unidirectional device **2424** disposed on the driving gear **2423.** Accordingly, at the time of the reciprocating motion of the controlling bars **243,** a dynamic force is generated and transmitted from the mutual meshing relation between the controlling gear **2421,** the linking unit **2422,** and the driving gears **2423** to the controlling wheel **241,** thereby driving the controlling wheel **241** to rotate in one direction. Preferably, the linking unit **2422** includes at least one linking gear. Herein, there are two linking gears **2422** meshed together as illustrated, so that the transmission assemblage **242** can be integrally arranged as shown in Fig. **3****.** Alternatively, the transmission assemblage **242** can be set by a combination of rotating gears with a driving belt, namely a linking belt (not shown) can be disposed between the controlling gear **2421** and the driving gear **2423** for transmitting the dynamic force.

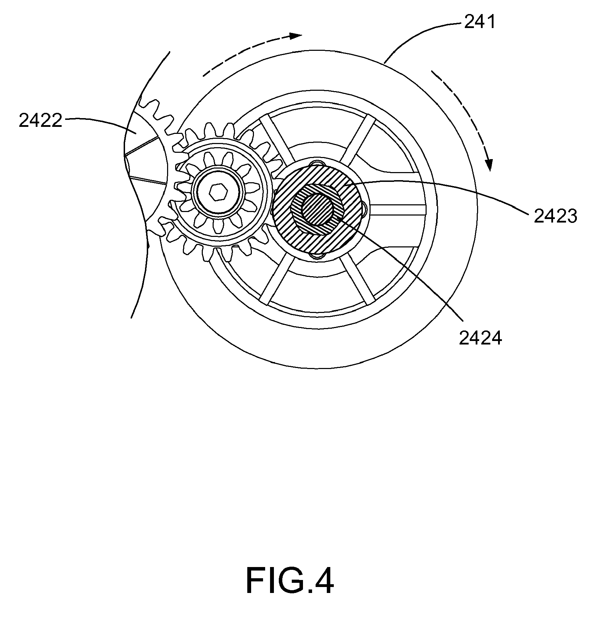

Referring to Fig. **2** and Fig. **3****,** while using, a user sits on the seat **23** and puts feet on the pedal **223.** By stepping the feet on the pedal **223,** the rotating angle of the rotor **221** can be controlled and adjusted. Further, user's hands hanging down on both sides of the seat **23** hold the controlling bars **243** respectively and activate the motion of the controlling bars **243** by some ways, such as pulling up one controlling bar **243** with one hand and pressing down the controlling bar **243** with the other hand alternately or simultaneously. By means of the reciprocating motion of the two controlling bars **243,** a dynamic force derived from the motion is generated and sequentially transmitted from the controlling gears **2421** and the linking unit **2422** which are meshed together to the driving gear **2423.** Then the driving gear **2423** uses the dynamic force to drive a regular and circular rotation of the controlling wheel **241.** It is noted that when the driving gear **2423** is affected by the controlling gear **2421** and the linking unit **2422,** a reverse force upon the driving gear **2423** may be incurred as one of the above motions of the controlling bar **243** may lead to a counterclockwise rotation of the driving gear **2423** e.g. the motion of pressing down or pulling up the controlling bar. By means of the unidirectional device **2424** which overcomes the reverse force, this reverse force does not offset the normal rotation of the driving gear **2423.** As a result, the driving gear **2423** driven by the linking unit **2422** can only rotate the controlling wheel **241** in one direction (as arrowed in Fig. **4****)**. Consequently, the moving stability of the amusement vehicle **2** is greatly increased. Further, the moving speed of the amusement vehicle **2** is adjustable by the operating speed of the transmission assemblage **242** which is controlled by the moving speed of user's hands. The rotating angle of the rotor **221** is controlled by putting feet on the pedal **223** and swinging the feet, thereby driving the rotating wheel **222** to move toward a direction where the user wishes to go and thus obtaining a self-propelling sliding effect of the amusement vehicle **2.** Therefore, the present invention obtains the fun of amusement during the operation and attains the exercise effect of training hands and feet. The present invention is also adapted to different ages.

In addition, during the forward movement of the amusement vehicle with rowing-type auxiliary device **2,** the moving direction can be not only controlled by the wiggles of feet but controlled by the wriggles of the waist, the buttocks, and other parts of the body, thereby stretching the whole body during the operation. Therefore, the user can exercise the whole body and control the moving speed at the same time. Consequently, by using the motion of hands to control the moving speed and using feet to control the rotating angle and the forward direction, the present invention can be operated with both hands and feet for increasing the fun of exercise and amusement of the use.

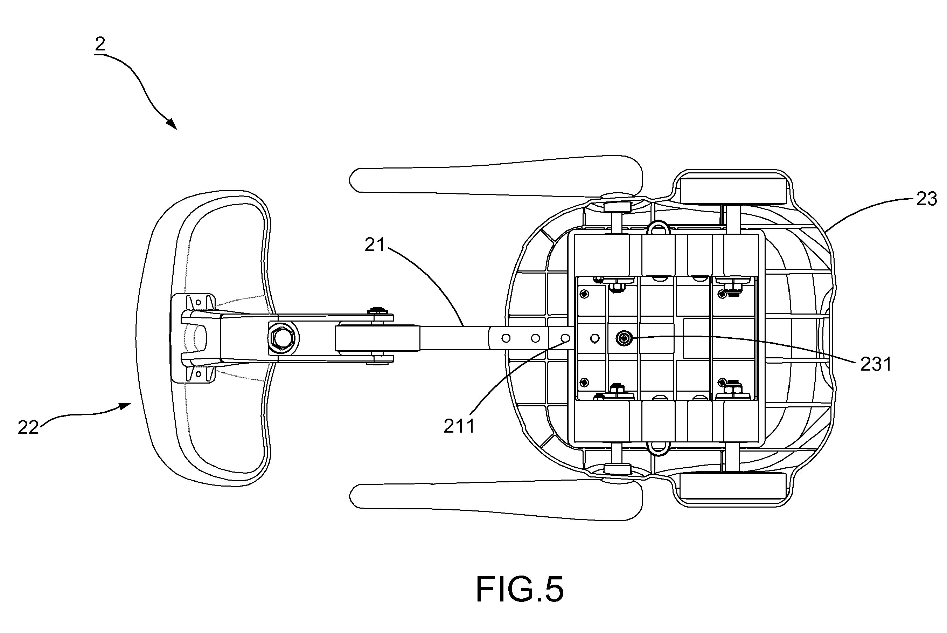

Referring to Fig.**5**, a second preferred embodiment of the present invention shown in an end view still comprises the same components as the first embodiment. Particularly, this preferred embodiment can adjust the stepping length of feet. In this embodiment, an adjusting unit **231** is disposed at a bottom of the seat **23** which is disposed on the chassis **21.** A plurality of holes **211** are defined on the chassis **21** for allowing the adjusting unit **231** to insert and fasten therein. Consequently, the user can properly adjust the distance between the seat **23** and the rotating apparatus **22** in accordance with the user's height to find a comfortable sitting position. During the adjustment, the release of the adjusting unit **231** on the seat **23** renders a loose connection between the seat **23** and the chassis **21,** which allows the seat **23** to displace until the adjusting unit **231** is correspondingly inserted and fastened into one of the holes **211** on the chassis **21.** Therefore, the distance between the seat **23** and the rotating apparatus **22** can be adjusted to increase the convenience of use.

To sum up, the amusement vehicle with rowing-type auxiliary device provides a rotating apparatus disposed at the front side of the chassis and a controlling apparatus disposed on both sides of the chassis. The user sits on the seat and moves the controlling bars of the controlling apparatus from side to side by hands for driving the controlling wheel to rotate and move forwards in one direction. Feet step on the rotating apparatus and control the rotating angle for moving to the direction where the user wants to go. Therefore, the user can obtain a dual controlling mode by hands and feet and enjoy the self-propelling sliding effect, whereby the fun of exercise and amusement in use is increased and the purpose of the present invention is exactly achieved.

While we have shown and described the embodiment in accordance with the present invention, it should be clear to those skilled in the art that further embodiments may be made without departing from the scope of the present invention.

## Claims

1. An amusement vehicle with rowing-type auxiliary device (2) comprising a chassis (21), a seat (23) disposed on said chassis (21), and a rotating apparatus (22) for controlling a moving direction of said vehicle (2);
**characterized in that** said rotating apparatus (22) is pivoted on said chassis (21), and a controlling apparatus (24) is disposed at two sides of said seat (23); wherein said rotating apparatus (22) provides a rotor (221) pivotally disposed on said chassis (21), a rotating wheel (222) pivoted on said rotor (221), and a pedal (223) disposed on said rotor (221); said controlling apparatus (24) including a controlling wheel (241) pivoted on said chassis (21), a pair of transmission assemblages (242) separately disposed on said chassis (21) for driving a rotation of said controlling wheel (241), and two controlling bars (243) disposed to drive said transmission assemblages (242) to operate respectively; each of said transmission assemblage (242) providing a controlling gear (2421) disposed on said controlling bars (243), a linking unit (2422) driven by said controlling gear (2421), a driving gear (2423) driven by said linking unit (2422) and connected to said controlling wheel (241), and a unidirectional device (2424) disposed on said driving gear (2423), whereby a reciprocating movement of said controlling bars (243) transmits a dynamic force to said controlling gear (2421), said linking unit (2422), and said driving gear (2423) sequentially in order to drive said controlling wheel (241) to rotate, and said dynamic force transmitted from said driving gear (2423) causes said controlling wheel (241) to rotate in one direction by using said unidirectional device (2424).

2. The amusement vehicle with rowing-type auxiliary device (2) as claimed in claim 1, wherein said linking unit (2422) includes at least one linking gear.

3. The amusement vehicle with rowing-type auxiliary device (2) as claimed in claim 1, wherein an adjusting unit is disposed at a bottom of said seat (23) which is disposed on said chassis (21), and a plurality of holes are formed on said chassis (21) for allowing said adjusting unit to insert and fasten therein correspondingly.
